# EUROPÄISCHE PATENTSCHRIFT

(11) **EP 0 610 810 B1**
(45) Veröffentlichungstag und Bekanntmachung des Hinweises auf die Patenterteilung: **23.10.1996**
(21) Anmeldenummer: 94101626.3
(22) Anmeldetag: 03.02.1994
(51) Int. Cl.: G02B 7/18, G02B 26/08

(54) **Deformierbarer Spiegel mit Kühlvorrichtung**
Deformable mirror with cooling device
Miroir déformable avec dispositif de refroidissement

(30) Priorität: 11.02.1993 DE 4304059
(43) Veröffentlichungstag der Anmeldung: 17.08.1994
(73) Patentinhaber: DIEHL GMBH & CO., D-90478 Nürnberg (DE)
(72) Erfinder: Bär, Klaus, D-91207 Lauf (DE); Schmiedl, Reinhard, D-91787 Weissenburg (DE)

(56) Entgegenhaltungen:
- DE-A- 3 900 467
- FR-A- 2 684 191
- US-A- 4 954 700
- PATENT ABSTRACTS OF JAPAN vol. 12, no. 493 (E-697) 22. Dezember 1988 & JP-A-63 205 976 (TOSHIBA CORP) 25. August 1988
- SOVIET JOURNAL OF QUANTUM ELECTRONICS., Bd.20, Nr.11, November 1990, NEW YORK US Seiten 1403 - 1406 APOLLONOV ET AL.

## Beschreibung

Die Erfindung betrifft eine Spiegeleinrichtung mit einem Spiegelelement gemäß dem Oberbegriff des Anspruchs 1.

Eine solche Einrichtung ist bekannt aus den PATENT ABSTRACTS OF JAPAN vol. 12 no. 493 (E-697) 22. Dezember 1988 & JP-A-63 205 976 (TOSHIBA CORP.) 25. August 1988. Bei der dort skizzierten Spiegelkonstruktion dient dem Kühlen einer sehr massiven Spiegelplatte eine noch massivere Kühlplatte, in der ihrerseits der Kühlraum ausgebildet ist, welcher vom Kühlmedium durchströmt wird. Die Spiegelplatte ist, offenbar zur Vermeidung von thermischen Verspannungen, nicht plan auf die Kühlplatte aufgelegt, sondern die Spiegelplatte ruht nur mit ihrem Randbereich auf einem flanschförmig umlaufenden Vorsprung der Kühlplatte. Das definiert im Zentralbereich hinter der Spiegelplatte einen wärmeisolierenden Hohlraum, so daß die entstehende Verlustwärme eine radiale Ableitung zur Temperatursenke am Rand der Spiegelplatte erfährt. Eine solche Wärmeisolierung des Mittenbereiches der Spiegelplatte gegenüber der Kühlplatte verschlechtert allerdings die bei dünnen, elektromechanisch verwölbbaren Spiegelplatten gerade im Zentralbereich, also beim Aktuator-Angriff erforderliche Kühlung.

Eine ähnliche Spiegeleinrichtung mit Kühlung ist aus der DE-A-39 00 467 bekannt. Dort bildet die Kühleinrichtung eine von der Spiegeleinrichtung räumlich getrennte Baueinheit, die in der Nachbarschaft eines Druckerzeugers für das Druckfluid vorgesehen ist. Bei dieser bekannten Spiegeleinrichtung wird also das Druckfluid außerhalb der Spiegeleinrichtung in der Kühleinrichtung entsprechend abgekühlt. Infolge der Tatsache, daß die Kühleinrichtung eine von der Spiegeleinrichtung räumlich getrennte Baueinheit und das Druckfluid gleichzeitig auch das Kühlmedium für die Spiegeleinrichtung bildet, ergibt sich eine relativ träge Kühlwirkung, die dazu führen kann, daß sich das Spiegelelement während des Betriebes der Spiegeleinrichtung insbes. durch Erwärmung noch ungewollt verwölben kann.

Der Erfindung liegt die Aufgabe zugrunde, eine Spiegeleinrichtung der eingangs genannten Art zu schaffen, bei welcher die Kühlwirkung bei einer vergleichsweise einfachen Ausbildung der Spiegeleinrichtung weiter verbessert ist, ohne die gesteuerte Auswölbung des Spiegelelementes bzw. der Grundplatte des Spiegelelementes zu beeinträchtigen.

Diese Aufgabe wird bei einer Spiegeleinrichtung der eingangs genannten Art erfindungsgemäß durch die Merkmale des kennzeichnenden Teiles des Anspruchs 1 gelöst. Bevorzugte Weiterbildungen der erfindungsgemäßen Spiegeleinrichtung sind in den Unteransprüchen gekennzeichnet.

Die mit der erfindungsgemäßen Spiegeleinrichtung erzielten Vorteile bestehen darin, daß sie äußerst einfach ausgebildet ist, was sich auf ihre Herstellungskosten und auf ihre Reparaturfreundlichkeit positiv auswirkt, und daß eine optimale Wärmeabfuhr aus der Spiegeleinrichtung möglich ist, wobei das Druckfluid und das Kühlmedium voneinander unabhängig passend auswählbar sind. Vor allem ist nun der Druck des die Einrichtung durchströmenden Kühlmediums ohne Einfluß auf die Spiegelflächen-Wölbung, die mittels eines Druckfluids in einer separaten Druckkammer bzw. mittels eines Linear-Aktuators im Angriff unmittelbar hinter der Spiegelgrundplatte eingestellt wird.

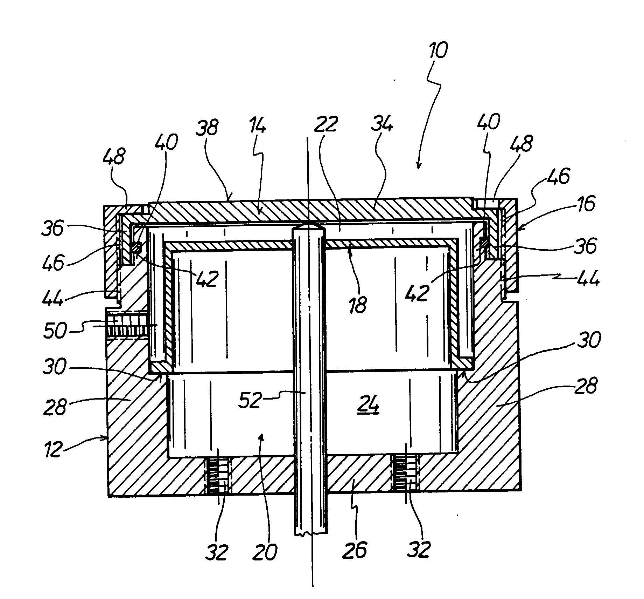

Weitere Einzelheiten, Merkmale und Vorteile ergeben sich aus der nachfolgenden Beschreibung eines in der Zeichnung dargestellten Ausführungsbeispieles der erfindungsgemäßen Spiegeleinrichtung.

Die Zeichnung zeigt in einem Längsschnitt eine Spiegeleinrichtung 10 mit einem topfartigen Gehäuse 12, einem Spiegelelement 14, einem Befestigungsorgan 16 zum Festlegen des Spiegelelementes 14 am topfartigen Gehäuse 12, und einem Trennelement 18, durch das der Zentralraum 20 des topfartigen Gehäuses 12 in einen Vorraum 22 und den eigentlichen Kühlraum 24 zur Abfuhr der Wärme aus der verwölbbaren Spiegelgrundplatte 34 unterteilt wird. Das topfartige Gehäuse 12 weist einen Boden 26 und eine vom Boden 26 einteilig wegstehende Seitenwandung 28 auf. Die zylinderhülsenförmige Seitenwandung 28 ist innenseitig mit einem ringförmig umlaufenden Absatz 30 ausgebildet, auf welchem das Trennelement 18 anliegt. Das Trennelement 18 besteht aus einem formstabilen und gut wärmeleitenden Material wie Kupfer. Der Boden 26 des topfartigen Gehäuses 12 ist mit Anschlüssen 32 für ein Kühlmedium ausgebildet, welche in den Kühlraum 24 einmünden. Bei dem besagten Kühlmedium kann es sich um Wasser handeln. Die Zwangsströmung des Kühlmediums ruft einen unter Umständen nicht konstanten Druck im Kühlraum 24 hervor, der aber wegen des Trennelementes 18 die Spiegelgrundplatte 34 selbst nicht mechanisch beeinflußt.

Das Spiegelelement 14 ist topfförmig mit einer deformierbaren Spiegelgrundplatte 34 und mit einem vom umlaufenden Rand der Spiegelgrundplatte 34 rückseitig wegstehenden Kragen 36 ausgebildet. Die Spiegelfläche ist mit der Bezugsziffer 38 bezeichnet. Der Vorraum 22 ist also durch die Spiegelgrundplatte 34, durch die Seitenwandung 28 des topfartigen Gehäuses 12 und durch das umgekehrt topfartige Trennelement 18 begrenzt. Zwischen dem umlaufenden Kragen 36 des Spiegelelementes 14 und der Seitenwandung 28 des Gehäuses 12 ist wenigstens ein Dichtungselement 40 vorgesehen. Dieses Dichtungselement 40 kann als O-Ringdichtung ausgebildet sein, welche in einer umlaufenden Rille 42 in der Seitenwandung 28 des Gehäuses 12 angeordnet ist. Die Seitenwandung 28 ist außerdem mit einem Außengewindeabschnitt 44 und das Befestigungsorgan 16 ist als Überwurfmutter mit einem Innengewinde 46 und einem Befestigungsflansch 48 ausgebildet, so daß es möglich ist, das Spiegelelement 14 auswechselbar am Gehäuse 12 zu befestigen und den Vorraum 22 mit einem gut wärmeleitenden Fluid wie Öl oder Wasser zu fluten, wenn er nicht als Druckraum für die Wölbung der Spiegelgrundplatte 34 dient.

In den Vorraum 22 der Spiegeleinrichtung 10 mündet wenigstens ein Anschluß 50 für ein Druckfluid ein, wenn der Vorraum 22 als Druckraum für eine extern gesteuerte Spiegelauswölbung dient.

Die Auswölbung der Spiegelgrundplatte 34 des Spiegelelementes 14 ist nämlich dann nur zum Druck des Druckfluids im Vor- bzw. Druckraum 22 proportional. Eine unerwünschte temperaturbedingte Auswölbung der Spiegelgrundplatte 34 wird dadurch verhindert, daß eine Temperaturerhöhung des im Vorraum 22 befindlichen Druckfluids durch eine entsprechende Wärmeabfuhr durch das Trennelement 18 hindurch in den Kühlraum 24 hinein erfolgt, durch den das Kühlmedium strömt.

Im Interesse einer guten Abfuhr der in der Spiegelgrundplatte 34 entstehenden Verlustwärme eines an der Spiegelfläche 38 reflektierten Hochenergie-Laserstrahls ist der Abstand von der Rückseite der Spiegelgrundplatte 34 zum Kühlraum 24 möglichst gering. Zu diesem Zweck erstreckt sich der zur Spiegelgrundplatte 34 parallele Bereich des möglichst dünnwandigen aber formstabilen plattenförmigen - oder wie gezeichnet - topfförmigen Trennelementes 18 dicht hinter der Spiegelgrundplatte 34 und begrenzt somit einen axial möglichst flachen, schmalen Vorraum 22 hinter der Spiegelgrundplatte 34. Das erhöht auch die Grenzfrequenz der Wechseldrucksteuerung.

Wenn die gesteuerte Auswölbung der Spiegelgrundplatte 34 nicht über den Druck im Vorraum 22 variiert werden soll, sondern über einen gegen das Gehäuse 12 abgestützten Linear-Aktuator 52, der das Trennelement 18 abgedichtet durchragt und an der Innen- bzw. Rückseite der Spiegelgrundplatte 34 anliegt, dann bedarf es des Anschlusses 50 für eine gesteuerte Druckänderung bzw. - schwankung im Vorraum 22 nicht; er dient dann nur noch der thermischen Überbrückung zum Kühlraum 24, dessen mögliche Druckschwankungen die Spiegelgeometrie nicht zusätzlich zur Aktuator-Druckwirkung beeinflussen.

## Patentansprüche

1. Spiegeleinrichtung (10) mit einem Spiegelelement (14) und mit einer zur Abfuhr überschüssiger Wärmeenergie aus der Spiegeleinrichtung (10) vorgesehenen Kühleinrichtung, wobei die Kühleinrichtung einen Kühlraum (24) aufweist, der von einem Kühlmedium durchströmt ist und der durch ein formstabiles Trennelement (18) aus einem gut wärmeleitenden Material räumlich getrennt ist von einem Vorraum (22) direkt hinter einer Spiegelgrundplatte (34),
**dadurch gekennzeichnet**,
daß es sich um die Spiegelgrundplatte (34) eines deformierbaren Spiegelelementes (14) handelt, welches in einem Gehäuse (12) gehaltert ist, das den Kühlraum (24) aufweist, wobei auch der Vorraum (22) von einem gut wärmeleitenden Fluid gefüllt ist.

2. Spiegeleinrichtung nach Anspruch 1,
**dadurch gekennzeichnet,**
daß das Trennelement (18) im Gehäuse (12) einen zum Spiegelelement (14)etwa parallelen Bereich dicht hinter dem Spiegelelement (14) aufweist, das das Gehäuse (12) in den kleinvolumigen Vorraum (22) und den Kühlraum (24) unterteilt.

3. Spiegeleinrichtung nach Anspruch 2,
**dadurch gekennzeichnet**,
daß das Trennelement (18) eine formstabile und großflächige wärmeübertragende Querschnittsgeometrie aufweist.

4. Spiegeleinrichtung nach einem der vorhergehenden Ansprüche,
**dadurch gekennzeichnet**,
daß das Gehäuse (12) topfartig mit einem Boden (26) und einer vom Boden (26) wegstehenden Seitenwandung (28) ausgebildet ist, wobei das Spiegelelement (14) das topfartige Gehäuse (12) auf der vom Boden (26) entfernten Seite abschließt und das Trennelement (18) an der Seitenwandung (28) festgelegt ist.

5. Spiegeleinrichtung nach Anspruch 4,
**dadurch gekennzeichnet**,
daß die Seitenwandung (28) zur Festlegung des Trennelementes (18) mit einem umlaufenden Absatz (30) ausgebildet ist.

6. Spiegeleinrichtung nach einem der vorhergehenden Ansprüche,
**dadurch gekennzeichnet**,
daß das Gehäuse (12) wenigstens einen in den Vorraum (22) einmündenden Anschluß (50) für ein Druckfluid als wärmeleitendes Fluid und wenigstens zwei in den Kühlraum (24) einmündende Anschlüsse (32) für das Kühlmedium aufweist.

7. Spiegeleinrichtung nach Anspruch 6,
**dadurch gekennzeichnet**,
daß wenigstens ein Anschluß (50) für das Druckfluid im Gehäuse (12) vorgesehen ist.

8. Spiegeleinrichtung nach Anspruch 6,
**dadurch gekennzeichnet**,
daß die Anschlüsse (32) für das Kühlmedium im Boden (26) des Gehäuses (12) vorgesehen sind.

9. Spiegeleinrichtung nach einem der vorhergehenden Ansprüche,
**dadurch gekennzeichnet**,
daß das Spiegelelement (14) topfförmig mit deformierbarer Spiegelgrundplatte (34) und vom umlaufenden Rand der Spiegelgrundplatte (34) rückseitig wegstehenden Kragen (36) ausgebildet und mittels eines Befestigungsorgans (16) am Gehäuse (12) festgelegt ist.

10. Spiegeleinrichtung nach einem der vorhergehenden Ansprüche,
**dadurch gekennzeichnet**,
daß das Gehäuse (12) achsparallel von wenigstens einem Linear-Aktuator (52) durchquert ist, der das Trennelement (18) durchgreift und hinter der Spiegelgrundplatte (34) abgestützt ist.

## Claims

1. Reflecting device (10) having a reflecting element (14) and a cooling device provided for carrying off surplus thermal energy from the reflecting device (10), the cooling device having a cooling chamber (24) through which a cooling medium flows and which is spatially separated by means of a dimensionally stable separating element (18) made of a good heat-conducting material from an antechamber (22) directly behind a reflecting base plate (34),
characterized in that
it is a matter of the reflecting base plate (34) of a deformable reflecting element (14), which is fixed in a housing (12), which has the cooling chamber (24), the antechamber (22) also being filled with a good heat-conducting fluid.

2. Reflecting device according to Claim 1,
characterized in that
the separating element (18) in the housing (12) has a section, roughly parallel to the reflecting element (14) and located close behind the reflecting element (14), which divides the housing (12) into the small-volume antechamber (22) and the cooling chamber (24).

3. Reflecting device according to Claim 2,
characterized in that
the separating element (18) has a dimensionally stable and large-surface heat-transferring cross-sectional geometry.

4. Reflecting device according to one of the preceding claims,
characterized in that
the housing (12) is designed as a type of pot having a base (26) and a side-wall (28) standing away from the base (26), the reflecting element (14) closing off the pot-like housing (12) on the side away from the base (26) and the separating element (18) being fixed to the side wall (28).

5. Reflecting device according to Claim 4,
characterized in that
the side wall (28) is formed with a shoulder (30) running round it for fixing the separating element (18).

6. Reflecting device according to one of the preceding claims,
characterized in that
the housing (12) has at least one connection (50) opening into the antechamber (22) for a pressure fluid as heat-conducting fluid and at least two connections (32) opening into the cooling chamber (24) for the cooling medium.

7. Reflecting device according to Claim 6,
characterized in that
at least one connection (50) for the pressure fluid is provided in the housing (12).

8. Reflecting device according to Claim 6,
characterized in that
the connections (32) for the cooling medium are provided in the base (26) of the housing (12).

9. Reflecting device according to one of the preceding claims,
characterized in that
the reflecting element (14) is designed in the shape of a pot having a deformable reflecting base plate (34) and a collar (36) standing away from the rear side of the circumferential rim of the reflecting base plate (34) and is fixed to the housing (12) by means of a fixing component (16).

10. Reflecting device according to one of the preceding claims,
characterized in that
the housing (12) is crossed parallel to its axis by at least one linear actuator (52), which passes through the separating element (18) and is supported behind the reflecting base plate (34).

## Revendications

1. Dispositif à miroir (10) comportant un élément réfléchissant (14) et un dispositif de refroidissement prévu pour évacuer l'excès d'énergie thermique hors du dispositif à miroir (10), le dispositif de refroidissement présentant une enceinte de refroidissement (24) qui est traversée par un écoulement de fluide de refroidissement et qui est séparée spatialement au moyen d'un élément séparateur (18) à forme stable et constituée d'un matériau bon conducteur de la chaleur, vis-à-vis d'une enceinte avant (22) se trouvant directement derrière une plaque de base de miroir (34), caractérisé en ce qu'il s'agit de la plaque de base à miroir (34) d'un élément réfléchissant (14) déformable qui est maintenu dans un carter (12) présentant l'enceinte de refroidissement (24), l'enceinte avant (22) étant également remplie d'un fluide bon conducteur de la chaleur.

2. Dispositif selon la revendication 1, caractérisé en ce que l'élément séparateur (18) présente dans le carter (12) une zone à peu près parallèle à l'élément réfléchissant (14), et se trouvant à proximité immédiate derrière l'élément réfléchissant (14), et subdivisant le carter (12) en l'enceinte avant (22) de petit volume et l'enceinte de refroidissement (24).

3. Dispositif à miroir selon la revendication 2, caractérisé en ce que l'élément séparateur (18) a une forme stable et a une géométrie de section transversale assurant la transmission de la chaleur sur une grande surface.

4. Dispositif à miroir selon l'une des revendications précédentes, caractérisé en ce que le carter (12) est réalisé en genre de pot avec un fond (26) et une paroi latérale (28) s'écartant du fond (26), l'élément réfléchissant (14) obturant le boîtier (12) en forme de pot, sur le côté éloigné du fond (26) et l'élément séparateur (18) étant fixé sur la paroi latérale (28).

5. Dispositif à miroir selon la revendication 4, caractérisé en ce que la paroi latérale (28) est conçue pour fixer l'élément séparateur (18) à un décrochement (30) ménagé sur le pourtour.

6. Dispositif à miroir selon l'une des revendications précédentes, caractérisé en ce que le carter (12) présente au moins un raccordement (50) débouchant dans l'enceinte avant (22) et destiné à un fluide sous pression, se présentant sous la forme d'un fluide caloporteur, et présente au moins deux raccordements (32) débouchant dans l'enceinte de refroidissement (24) et destinés au fluide de refroidissement.

7. Dispositif à miroir selon la revendication 6, caractérisé en ce qu'au moins un raccordement (50) est prévu pour le fluide sous pression, dans le carter (12).

8. Dispositif à miroir selon la revendication 6, caractérisé en ce que les raccordements (32) destinés au fluide de refroidissement sont prévus dans le fond (26) du carter (12).

9. Dispositif à miroir selon l'une des revendications précédentes, caractérisé en ce que l'élément réfléchissant (14) est en forme de pot avec une plaque de base de miroir (34) déformable et une collerette (36) s'écartant du côté de la bordure vis-à-vis du bord de pourtour de la plaque de base de miroir (34), et fixé au moyen d'un organe de fixation (16) sur le carter (12).

10. Dispositif à miroir selon l'une des revendications précédentes, caractérisé en ce que le carter (12) est traversé parallèlement à l'axe par au moins un actionneur linéaire (52) qui traverse l'élément séparateur (18) et est soutenu derrière la plaque de base de miroir (34).
